# EUROPEAN PATENT SPECIFICATION

(11) **EP 4 304 135 B1**
(45) Date of publication and mention of the grant of the patent: **03.12.2025**
(21) Application number: 22183827.9
(22) Date of filing: 08.07.2022
(51) Int. Cl.: H04L 12/40

(54) **CONTROLLER AREA NETWORK (CAN) TRANSCEIVER, CAN NODE, CAN SYSTEM AND METHOD FOR THE CAN TRANSCEIVER**
STEUERGERÄTENETZSENDEEMPFÄNGER, STEUERGERÄTENETZKNOTEN, STEUERGERÄTENETZSYSTEM UND VERFAHREN FÜR DEN STEUERGERÄTENETZSENDEEMPFÄNGER
ÉMETTEUR-RÉCEPTEUR DE RÉSEAU DE ZONE DE CONTRÔLEUR (CAN), NOEUD CAN, SYSTÈME CAN ET PROCÉDÉ POUR L'ÉMETTEUR-RÉCEPTEUR CAN

(43) Date of publication of application: 10.01.2024
(73) Proprietor: NXP B.V., 5656 AG Eindhoven (NL)
(72) Inventor: Walrant, Thierry G. C., 5656 AG Eindhoven (NL); Muth, Matthias Berthold, 5656 AG Eindhoven (NL); Elend, Bernd Uwe Gerhard, 5656 AG Eindhoven (NL)
(74) Representative: Schmütz, Christian Klaus Johannes

(56) References cited:
- WO-A1-2021/030123
- US-A1- 2021 044 615
- US-A1- 2021 120 017

## Description

### TECHNICAL FIELD

The present disclosure relates to a Controller Area Network (CAN) transceiver, a CAN node, a CAN system and a method for the CAN transceiver.

### BACKGROUND

CAN bus is a message-based communications bus protocol that is often used within automobiles. The CAN bus protocol can be used to enable communications between various electronic control units (ECUs), such as an engine control module (ECM), a power train control module (PCM), airbags, antilock brakes, cruise control, electric power steering, audio systems, windows, doors, mirror adjustment, battery and recharging systems for hybrid/electric cars, and many more. The data link layer of the CAN protocol is standardized as International Standards Organization (ISO) 11898-1. The standardized CAN data link layer protocol is in the process of being extended to provide higher data rates. The CAN protocol has been updated to also cover for example flexible data rates, in particular referring to CAN Flexible Data-Rate or "CAN FD" and will be further updated to support even higher bit rates and a higher maximum amount of data, referring to CAN XL.

CAN as a message-based protocol that uses two wires to enable multiple devices to communicate messages among each other. For each message, the data in a frame is transmitted bitwise sequentially but in such a way that if more than one device transmits messages at the same time, only the highest priority message is able to continue while other devices stop transmitting their message. This process, known as non-destructive "arbitration", is used by all sending devices and the device that attempts to send the highest priority message wins the arbitration. Transmitted messages are received by all devices. However, a malicious device may attempt to hijack the bus control even after losing the arbitration.

In the CAN bus, each microcontroller or Electronic Control Unit (ECU) uses a transceiver to send and receive data on a CAN bus. A typical transceiver normally provides a ISO 11898 standard compliant communication over the CAN bus without scrutinizing the data content.

One growing concern with in-vehicle networks, such as in-vehicle networks that use the CAN bus protocol, is network security, including intrusion detection and intrusion prevention. For example, a compromised in-vehicle network could allow an attacker to maliciously control components of a vehicle and/or allow an attacker to send malicious messages to other ECUs.

WO 2021/030123 A1 relates to a system for neutralization of improper or unauthorized messages on the CAN bus.

US 2021/044615 A1 relates to a security module for a CAN node.

### SUMMARY

The present invention is defined in the appended independent claims to which reference should be made. Advantageous features are set out in the appended dependent claims.

### DESCRIPTION OF DRAWINGS

Embodiments of the present disclosure will be described in more detail with reference to the appended drawings.
Figure 1 shows a simplified block diagram of a CAN transceiver.
Figure 2 shows a simplified block diagram of a CAN node.

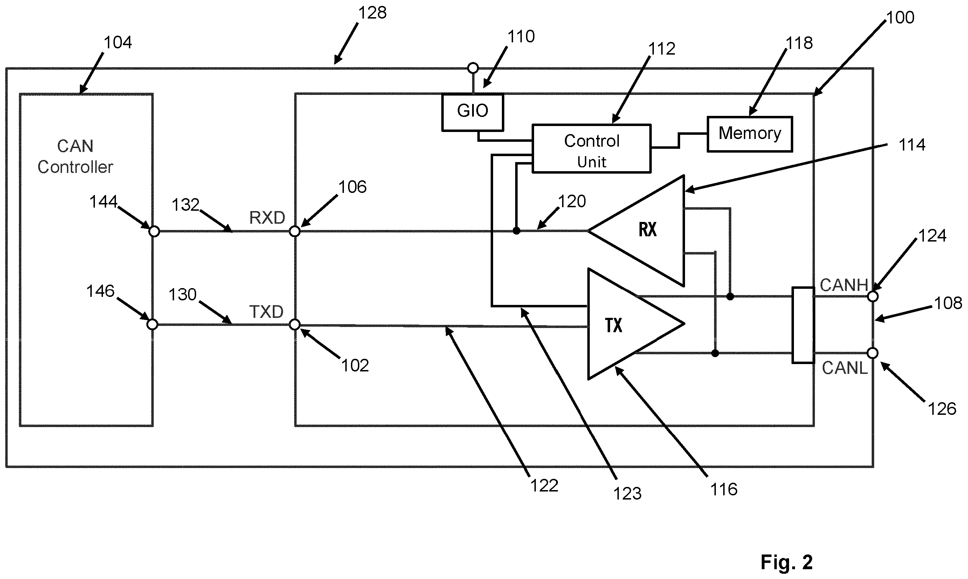

Figure 2 shows a simplified block diagram of a CAN system.

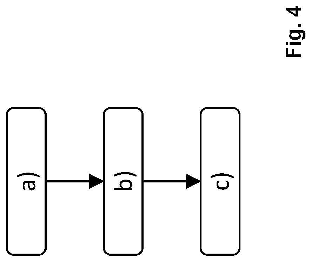

Figure 4 shows depicts a simplified flow chart of the method.

### DESCRIPTION OF EMBODIMENTS

Controller Area Network (CAN) is a multi-drop bus system with all connected nodes having the same bus access rights. Meaning that there is no coordinator or commander that controls when individual nodes have access to read and write data on the CAN bus. The CAN frames that are transmitted do not contain addresses of either the transmitting node or any of the intended receiving node(s). Instead, an arbitration ID that is unique throughout the network is contained in a data frame. All nodes on the CAN bus receive every CAN frame that is transmitted by any node, and, depending on the message or arbitration identifier of the transmitted frame, each CAN node on the bus decides whether to accept the frame for further processing.

If multiple nodes try to transmit messages onto the CAN bus at the same time, the node with the highest priority (lowest value of message or arbitration identifier) gets bus access. Lower-priority nodes (or messages) must wait until the bus becomes available before trying to transmit again.

The CAN protocol according to ISO 11898 specifies the structure of a CAN frame. The CAN frame may include:
1. SOF (start-of-frame) bit - indicates the beginning of a message with a dominant (logic 0) bit.
2. Arbitration Field - comprising an identifier (ID) which identifies the message and indicates the message's priority. Frames come in two formats -- standard, which uses an 11-bit arbitration ID, and extended, which uses a 29-bit arbitration ID.
3. IDE (identifier extension) bit - allows differentiation between frames using standard or extended identifier.
4. RTR (remote transmission request) bit - serves to differentiate a remote frame from a data frame. A dominant (logic 0) RTR bit indicates a data frame. A recessive (logic 1) RTR bit indicates a remote frame.
5. DLC (data length code) - indicates the number of bytes the data field contains.
6. Data Field - contains for example 0 to 8 bytes of data.
7. CRC (cyclic redundancy check) field containing several bits for a cyclic redundancy check code and a recessive delimiter bit and preferably also SBC (Stuff Bit Count) bits. The CRC field is used for error detection.
8. CRC delimiter bit.
9. ACK (ACKnowledgement) slot - any CAN controller that correctly receives the message sends an ACK bit at the end of the message. The transmitting node checks for the presence of the ACK bit on the bus and optionally reattempts transmission if no acknowledge is detected.
10. ACK delimiter bit. The ACK delimiter bit shall be transmitted as a recessive bit. This means, the ACK Slot shall be surrounded by recessive bits.
11. End of Frame (EOF) field preferably containing 7 bits.
12. Intermission (INT) field preferably containing 3 bits.

The ISO 11898 standard has been developed at a time security was not a primary concern. In a partial networking scenario, a valid frame decoding in a CAN transceiver does not consider the values of the bits after the CRC delimiter. In such a case, a standard Error Frame after a valid CRC cannot be used to invalidate the frame already accepted by the CAN transceiver prior the ACK slot bit. Whenever the frame is considered malicious by the CAN transceiver, the possible standard transmission invalidation with an error frame as defined by ISO 11898-1 is not able to prevent or block the unauthorized instructions represented by the decoded frame. A malicious node is able to arbitrarily control other nodes with control instructions leading to unexpected consequences.

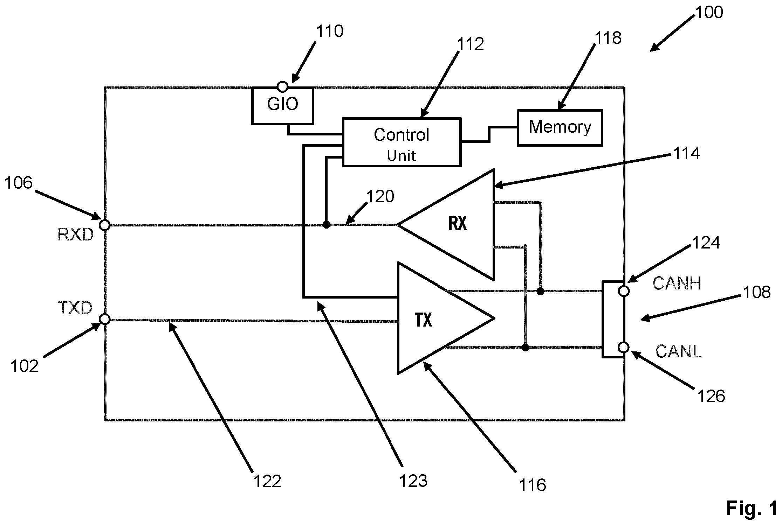

Figure 1 schematically shows an embodiment of a CAN transceiver 100. The CAN transceiver 100 may also be referred to as the transceiver 100 for short. The CAN transceiver 100 comprises a transmit data (TXD) input interface 102 for receiving a TXD input signal from a CAN controller 104. Preferably, the TXD input signal is a digital signal. The CAN controller 104 is not part of the transceiver 100. The CAN transceiver 100 further comprises a receive data (RXD) output interface 106 for transmitting an RXD output signal to the CAN controller 104. Preferably, the RXD output signal is a digital signal. Furthermore, the CAN transceiver 100 comprises a CAN BUS interface 108 for transmitting and receiving CAN bus signals. For example, a CAN bus signal can be transmitted via the CAN BUS interface 108 by means of the CAN transceiver 100. In an example, the CAN transceiver 108 can also receive a CAN bus signal via the CAN BUS interface 108. The CAN transceiver 100 further comprises a control interface 110. The control interface 110 may be configured to transmit a control signal and/or receive a control signal. The control interface 110 is not formed by the TXD input interface 102, nor by the RXD output interface 106. Furthermore, the control interface 110 is not formed by the CAN BUS interface 108. The control interface 110 is thus another interface of the CAN transceiver 100. The CAN transceiver 100 further comprises a control unit 112. Preferably, the control unit 112 is used to control the control interface 110. For example, the control unit 112 may be used to cause a control signal to be transmitted via the control interface 110 and/or to cause a control signal to be received via the control interface 110.

In principle, the CAN transceiver 100 may be configured to receive a TXD input signal via the TXD input interface 102, to generate a CAN bus signal according to the CAN protocol based on the received TXD input signal, and to transmit the generated CAN bus signal via the CAN BUS interface 108. Further, the CAN transceiver 100 may be configured in principle to receive a CAN bus signal according to the CAN protocol via the CAN BUS interface 108, to generate an RXD output signal based on the received CAN bus signal, and to send the RXD output signal via the RXD output interface 106.

Reference identification information is stored by the CAN transceiver 100 within the memory 118, and is in particular used by the associated control unit 112. The reference identification information may be predefined and/or predetermined. In an example, the reference identification information represents information suitable for identifying a frame comprising bits that may be potentially relevant and/or adapted for controlling the control interface 110. A frame being potentially adapted and/or relevant for controlling the control interface may be formed by a frame, which comprises identification information, which is related to the control interface and/or is an identifier for identifying the frame, the control interface and/or the CAN transceiver.

A CAN bus signal representing a sequence of bits may be received via the CAN BUS interface 108 of the CAN transceiver 100. A frame comprises a plurality of sequentially consecutive bits. Thus, the CAN bus signal received via the CAN BUS interface 108 may also represent a plurality of sequentially received frames. To avoid having to subject each received frame to a full content analysis, it may be helpful to first determine whether a received frame could potentially be relevant to control of the control interface. Such a determination may detect frames that can actually be used to control the control interface 110, but may also theoretically detect frames that actually cannot used (and/or unappropriated) to control the control interface 110 or are illegally to control the control interface 110. For example, if a CAN node 128 has been compromised such that the compromised CAN node 128 becomes malicious and sends a frame to control the control interface 110 over a CAN network 142 in order to damage the CAN transceiver 100 with the associated control interface 110 or in order to damage a component directly or indirectly coupled to the control interface 110, the frame is only illegally capable of controlling the control interface 110. Against this background, there is a need to prevent a frame that is theoretically, but not actually, or only illegally, capable of controlling a control interface 110 of a CAN transceiver 100 from causing control of the control interface 110.

As will become apparent below, the control unit 112 of the CAN transceiver 100 is preferably configured to first detect a frame that is potentially used to control the control interface 110, and then classify the detected frame as either an authorized frame or an unauthorized frame. Only the authorized frame is eligible to be used to control the control interface 110. While the unauthorized frame could theoretically also be used to control the control interface 110, the unauthorized frame lacks the necessary authorization. In an example, the unauthorized frame generated by a malicious node, for example, is discarded so that damage to the associated CAN transceiver 100 and/or a device directly or indirectly connected to the control interface 110 of the CAN transceiver 100 can be effectively prevented.

The control unit 112 of the CAN transceiver 100 is configured to detect, based on the stored reference identification information, a frame represented by a received CAN bus signal as a control frame (CT frame) potentially suitable for controlling the control interface 110. As previously explained, while a frame such as the CT frame may theoretically be suitable for controlling the control interface 110. Suitability for controlling the control interface 110 is preferably not the only requirement for actually using the CT frame for controlling the control interface 110. Rather, the CT frame must also be authorized to be used to control the control unit 110.

The control unit 112 of the CAN transceiver 100 is configured to classify the CT frame as either an authorized frame (AT frame) or an unauthorized frame (UT frame). The classification is based on an acknowledgement delimiter bit (AD bit) of the CT frame and based on an end-of-frame field (EOF field) of the CT frame.

By building a frame according to the CAN protocol, a CAN controller of a typical participant CAN node is able to detect an error during the transmission of a frame over the CAN BUS 142. If an error is detected by a participant CAN node, the participant CAN node informs the other participant CAN nodes by sending an error frame. By receiving an error frame, the CAN controllers of the other participant CAN nodes discard the erroneous frame. An error frame consists of a sequence of 6 or more consecutive dominant bits. By sending an error frame, a violation of the coding rule of the CAN protocol is deliberately caused.

In a typical CAN transceiver, a received and decoded frame is often evaluated as valid as soon as the CAN transceiver determines that the CRC field of the received and decoded frame represents a correct value. Based on the supposedly valid frame, the typical CAN transceiver then performs further steps. Thus, the typical CAN transceiver does not wait until the end of the complete reception of the frame before the typical CAN transceiver performs the previously mentioned steps. However, if constructing a frame according to the CAN protocol, the CRC field is still followed by the Acknowledge field, which includes the AD bit, and the EOF field. The typical CAN transceiver therefore neglects at least the AD bit and the EOF field due to the premature execution of the further steps.

For the CAN transceiver 100 according to the present disclosure, it is provided that the CAN transceiver 100 does not neglect the AD bit and the EOF field of a CT frame, but considers the AD bit and the EOF field of a CT frame before using the corresponding frame to control the control interface 110. As previously explained, an error frame may in principle be sent at any time by a participant CAN node 128 over the CAN BUS 142. Thus, it is possible for a participant CAN node 128 to send an error frame that overwrites the transmission of the AD bit of the CT frame or the transmission of the bits of the EOF field of the CT frame. As a result of the explained overwriting with the error frame, the CT frame is detected by the control unit 112 of the CAN transceiver 100 as erroneous and consequently classified as an unauthorized UT frame. If the control unit 112 detects an error frame in the AD bit of the CT frame and/or in a bit of the EOF field of the CT frame, the CT frame is classified as an unauthorized UT frame by the control unit 112. If the control unit 112 does not detect an error frame in either the AD bit of the CT frame or in a bit of the EOF field of the CT frame, the CT frame is classified by the control unit 112 as an authorized AT frame. Only the AT frame can be used by the control unit 112 to control the control interface 112. Preferably, the UT frame is discarded and/or not used by the control unit 112 to control the control interface 110.

The control unit 112 of the CAN transceiver 100 is preferably configured to determine whether a data field of the AT frame represents control instructions for controlling the control interface 110. According to the CAN protocol, each AT frame may comprise a data field with 0-8 bytes of data. It is to be noted that a data field may comprise more than 8 bytes of data, for instance 0 to 64 bytes, or even 1 to 2048 bytes. Further, the control unit 112 of the CAN transceiver 100 is configured to control the control interface 110 based on the data field of the AT frame if the data field of the AT frame represents control instructions for controlling the control interface 110. However, if it is determined by the control unit 112 of the CAN transceiver 100 that the data field of the AT frame does not represent control instructions for controlling the control interface, control of the control interface 110 based on the AT frame is also not performed.

The CAN transceiver 100 provides the advantage that control of the control interface 110 of the CAN transceiver 100 is not performed based on a frame received via a CAN bus signal until unless the control unit 112 of the CAN transceiver 100 has determined that the frame is potentially suitable for controlling the control interface 110, the frame is an authorized frame, and the frame further actually comprises control instructions for controlling the control interface 110. By considering only the authorized frames among the potentially relevant frames, it is prevented that the control interface 110 can be controlled by an illegitimately generated frame, and/or that in an unfavorable case, damage to the CAN transceiver 100 and/or damage to a device coupled to the control interface 110 can occur. Furthermore, it is taken into account that not every frame potentially selected for controlling the control interface 110 actually represents control instructions suitable for controlling the control interface. Only those frames that actually represent control instructions in an associated data field are considered for control of the control interface 110. As a result, the configuration of the control unit 112 ensures that actual suitable and relevant frames are found for controlling the control interface 110, while at the same time safely preventing illegitimately generated frames from causing damage to the CAN transceiver 100 and/or a device coupled to the control interface 110.

Furthermore, it should be mentioned that the CAN transceiver 100 can control the associated control interface 110 independently of the CAN controller 104. In particular, the CAN transceiver 100 does not have to wait for feedback from the CAN controller 104 to control the control interface 110.

Each frame that complies with the CAN standard includes an arbitration field with an identifier that is to be referred to as the frame identifier. In an example the frame identifier consists of 11 bits. In another example, the frame identifier consists of 29 bits. The frame identifier identifies the associated frame. In addition, the frame Identifier may indicate the priority of the associated frame. In an example, the frame identifier of a frame may be understood as and/or indicative of the identification information of the respective frame.

Reference identification information may be stored by the CAN transceiver 100. The CAN transceiver may have a memory unit 118. The reference identification information may be stored by the memory unit 118. The control unit 112 may be connected to the memory unit 118. It is also possible that the memory unit 118 forms an integral part of the control unit 112. The control unit 112 may read the reference identification information from the memory unit 118.

As previously discussed, the control unit 112 is preferably configured to detect a frame as a CT frame from a plurality of frames represented by a received CAN bus signal based on the stored reference identification information.

The reference identification information may represent a reference identifier and/or a pattern for a plurality of reference identifiers. A reference identifier may be an identifier, which the control unit 112 can refer to. The pattern of reference identifiers may cover a plurality of different reference identifiers. The reference identifier and/or the pattern for the plurality of reference identifiers may be predefined. The control unit 112 may be configured to compare the frame identifier of each frame received via a CAN bus signal with the reference identification information (i.e., either the reference identifier or the pattern for the plurality of reference identifiers). If a result of the comparison represents that the frame identifier of a frame corresponds to or is identical to the reference identification information, that frame is determined to be a CT frame by the control unit. Thus, the detection of the CT frame is performed. If the result of the comparison represents that the frame identifier of a frame neither corresponds to the reference identification information nor is identical to the reference identification information, this frame is not determined as a CT frame by the control unit 112, but preferably this frame is discarded.

It is to be noted that the detection may include the complete evaluation of the frame including the CRC. In an example, the complete evaluation may be performed, unless a false positive detection based in frame ID and payload (as part of the reference identification information description), should have been considered incorrect (false decoding) due to a bad CRC.

In another example, a frame may be identified based on a predetermined combination of bits of the respective frame, where these bits are referred to as identification bits. The identification bits may be different from the frame identifier of the respective frame. In an example, the identification bits do not have a single bit of the frame identifier. Instead, the identification bits may comprise bits of the data field of the frame and/or at least another field of the frame, except for the identifier field. In another example, the identification bits may have one or some bits of the frame identifier, but the identification bits preferably do not comprise all bits of the frame identifier. Therefore, the identification information may comprise some bits if the identifier, may comprise some bits of other fields of the frame, and may even comprise bits of the data field, wherein the data field may represent control instructions for the control interface. In another example, the reference identification information stored by the CAN transceiver 100 may represent reference identification bits and/or a pattern for a plurality of reference identification bits.

The reference identification bits may be bits suitable for detecting a frame comprising identification bits, which are identical to the reference identification bits or correspond to the reference identification bits. The control unit 112 may refer to the reference identification bits to detect such a frame among other frames received via the CAN BUS signal. The reference identification bits may be a predetermined combination of bits, which may be referred to as reference identification bits. The reference identification bits may be different from the reference identifier. In an example, the reference identification bits do not have a single bit of the frame identifier. In a further example, the reference identification bits represent bits for a frame, which is supposed to be detected. Thus, the reference identification bits may represent reference bits for the identification bits of the frame, which is supposed to be detected.

The pattern of reference identifications may cover a plurality of different reference identifications. As a result, this pattern may also cover a plurality of different sets of identification bits. The reference identification bits and/or the pattern for the plurality of reference identification bits may be predefined. The control unit 112 may be configured to compare the identification bits of each frame received via a CAN bus signal with the reference identification information (i.e., either the reference identification bits or the pattern for the plurality of reference identification bits). If a result of the comparison represents that identification bits of a frame correspond to or are identical to the reference identification information, that frame is determined to be a CT frame by the control unit. Thus, the detection of the CT frame is performed. If the result of the comparison represents that identification bits of a frame neither corresponds to the reference identification information nor is identical to the reference identification information, this frame is not determined as a CT frame by the control unit 112, but preferably this frame is discarded.

In an example, the control interface 110 is formed as a general purpose input/output (GPIO). The control interface 110 may have a single pin or multiple pins. In an example, the control unit 112 is coupled to the control interface 110 such that the control unit 112 can generate a digital or analog signal on one or more pins of the control interface 110. Thus, the GPIO may comprise a mix of digital and/or analog pins and a mix of input and/or output pins. In an example, the control unit 112 is coupled to the control interface 110 to control the control interface via the control signal such that the control unit 112 can receive or sense a digital or analog signal at one or more pins via the control interface 110. In an example, the control interface 110 may be a part of the control unit 112.

If a data field of an AT frame represents control instructions for controlling the control interface 110, the control unit 112 may control the control interface 110 based on the control instructions. In an example, the control unit 112 may control the control interface 110 based on the control instructions such that a predefined signal or a signal defined by the control instructions is generated on at least one pin of the control interface 110. The associated pin may be designated and/or configured as an output pin. In this case, the control instructions may represent the generation of a signal at the control interface 110. In another example, the control instructions may represent sensing a signal at the control interface 110. In this case, the control unit 112 may control the control interface 110 based on the control instructions such that a signal is detected on at least one pin of the control interface 110. The associated pin may be designated and/or configured as an input pin. In another example, the control instructions may represent a combination of the aforementioned control instructions. As a result, the control unit 112 may first control the control interface 110 such that a signal is generated on at least one pin of the control interface 110, and then control the control interface 110 such that a signal is detected or received on at least one pin, particularly another pin, of the control interface 110.

In an example, the control instructions represented by the AT frame may represent and/or indicate the control interface 110 and/or the signal to be generated at the control interface 110. For example, the control instructions may represent the instruction to generate a predefined control signal at a pin of the control interface 110.

If a first control signal generated via an output pin of the control interface 110 is sent "unsuccessful" (e.g., externally clamped), the control unit 112 may read back a second control signal (representing the "situation") via an input pin of the control interface 110. The control unit 112 may be configured to cause a CAN BUS signal representing an overload flag via the CAN BUS interface 108. The overload flag may represent the "unsuccessful situation" on an output pin of the control interface 110. The overload flag may be designed to start 3 bits before idle. As a result, the overload flag could be triggered by activation of the output pin and would still be visible in the same frame in an example. The sending node, which has sent the AT frame with the instruction for the control interface 110, would now receive information back via the CAN BUS and would now know that the output pin is possibly damaged or manipulated.

In another example, a signal is generated via the control interface 110. In response to the signal sent, the control unit 112 may receive another signal via the control interface 110. The control unit 112 may be configured to cause a message to be sent at the CAN BUS interface 108, wherein the message representing or indicating the other signal received at the control interface 110.

In an example, the CAN transceiver 100 is configured to receive a feedback signal via the control interface 110 resulting from a signal previously transmitted via the control interface 110.

In another example, the control unit 112 may be configured to either detect a fault in the feedback signal or whether the feedback signal represents a fault, and wherein the CAN transceiver 100 is configured to send a CAN BUS signal over the BUS interface 108 indicating the detected fault in the event of a detected fault. In an example, the fault may be an overload of an external device coupled to the control interface 110. If a signal is sent to the external device via the control interface 110, it may result in a feedback signal that directly or indirectly represents the external device fault. The resulting CAN bus signal may represent the overload of the external device, in particular by an error flag or an overload flag.

In an example, the CAN transceiver 100 includes a receiver 114, wherein an input of the receiver 114 is coupled to the CAN BUS interface 108, and wherein the receiver 114 is configured to generate a digital RXD output signal based on a CAN BUS signal received via the CAN BUS interface 108. The CAN BUS interface 108 preferably has two pins, namely a first pin 124, referred to as the CANH pin 124, and a second pin 126, referred to as the CANL pin 126. The two pins 124, 126 may be used to receive a differential voltage signal from the CAN BUS interface 108 as the CAN bus signal. The receiver 114 may be coupled to both pins 124, 126 of the CAN BUS interface 108 to also receive the CAN Bus signal. Based on a received CAN Bus signal, the receiver 114 may generate a digital RXD output signal such that a frame represented by the received CAN Bus signal is also represented by the digital RXD output signal. Thus, if reference is made to a frame represented by the CAN bus signal, reference is preferably made simultaneously to a frame represented by the digital RXD output signal. Preferably, the control unit 112 is also coupled to the output of the receiver 114 so that the control unit 112 can also receive the digital RXD output signal. As previously explained, the same frames may be represented by the RXD output signal as by the CAN BUS signal. Therefore, based on the stored reference identification information, the control unit 112 may be configured, for example, to identify a frame among a plurality of frames represented by the RXD output signal generated by the receiver 114 as a CT frame potentially suitable for controlling the control interface 110.

In an example, the output of the receiver 114 is directly coupled to the RXD output interface 106 and directly coupled to the control unit 112. Signal connections may be provided for coupling. As can be seen schematically from Figure 1, a signal line 120 may extend in a Y-shape from the output of the receiver 114 with one arm to the RXD output interface 106 and with another arm to the control unit 112. It is also preferred that an input of the receiver 114 is directly coupled to the CAN BUS interface 108. If a CAN bus signal representing frames is received via the CAN BUS interface 108, all such frames are represented by the RXD output signal and forwarded by the RXD output signal via the RXD output interface 106, for example to the CAN controller 104. In particular, no frames are taken out by the control unit 112. Therefore, the CAN transceiver 100 preferably retains the associated basic function.

In another example, the CAN transceiver 100 includes a transmitter 116. The transmitter 116 is configured to generate a CAN bus signal based on a TXD input signal. The TXD input signal may be received by the CAN transceiver 100 via the TXD input interface 102. Preferably, an input of the transmitter 116 is directly coupled to the TXD input interface 102. In an example, the control unit 112 may also be connected via a further signal line 123 to an input of the transmitter 116. As a result, the control unit 112 may be able to drive the transmitter 116, for example to cause a transmission of an overload flag to the CAN BUS as feedback information. In another example (not shown in Fig. 1), only the TXD input interface 102 may be coupled to the input of the transmitter 116 via a signal line 122. An output of the transmitter 116 is coupled to the CAN BUS interface 108. If frames are received from the transmitter 116 via the TXD input signal, the transmitter 116 generates a CAN bus signal based on the TXD input signal that represents all frames represented by the TXD input signal. In this regard, the CAN transceiver 100 preferably retains the associated basic function.

In an example, the control unit 112 is configured to detect each frame represented by the RXD output signal. The structure of each frame preferably corresponds to the structure specified by the CAN standard. The control unit 112 may be configured to store the general frame structure, and based on the stored frame structure, detect each frame represented by the RXD output signal. Preferably, the control unit 112 is configured to detect the identifier of each frame. The control unit 112 may be configured to check the frames represented by the RXD output signal to detect, among the frames represented by the RXD output signal, each CT frame using the reference identifier information.

In an example, the control unit 112 of the CAN transceiver 100 is configured to perform the following steps i) to iii) for each frame represented by the CAN bus signal and/or the RXD output signal, respectively: i) detecting an identification field of the frame as identification information and/or predefined bits of the frame as identification information, ii) comparing the detected identification information of the frame with the reference identification information, and iii) determining the frame as a CT frame if the detected identification information of the frame is identical or corresponds to the reference identification information.

In an example, the identification information of a frame is determined by the associated identifier that is provided in the identification field of the frame. However, a frame may also be identified by other associated bits. The bits of a frame that are relevant for identification may be predefined in their arrangement within the frame, so that each frame is identifiable based on the corresponding bits. These bits may also serve as an embodiment of the frame's identification information. The control unit 112 may be configured to detect the identification information of a frame. For example, the control unit 112 may read the identifier of a frame or the bits in the aforementioned arrangement from the frame to determine the identification information of the frame. By comparing the identification information of the frame with the reference identification information, the control unit 112 may determine whether the frame is to be considered a CT frame, namely if the detected identification information is identical or corresponds to the reference identification information. Otherwise, for example, the frame cannot be evaluated as a CT frame.

Considering the reference identification information thus offers the advantage that only potentially relevant frames are considered for further processing, in particular for controlling the control interface 110. This means that the computing effort can be minimized.

In another example, the control unit 112 may be configured to discard a detected frame if the associated identification information is not identical to or does not correspond to the reference identification information. Discarding the frame may be performed as step iv) by the control unit 112 following step iii) previously mentioned. By discarding a frame, the frame cannot be used to control the control interface 110. This can effectively prevent unsuitable or unacceptable frames from influencing the control interface 110.

In an example, the control unit 112 of the CAN transceiver 100 is configured to determine a CT frame based on a checksum of the CT frame as either an error-free CT frame or an erroneous CT frame. The control unit 112 may be configured to discard the CT frame if the CT frame is erroneous. By checking the CT frame against the associated checksum, an authorization check may be performed using the control unit 112. In an example, only if the CT frame is found to be error-free by the check, the CT frame is authorized for further use. This can effectively prevent erroneous CT frames from causing unwanted and possibly faulty control of the control interface 110.

In an example, the control unit 112 of the CAN transceiver 100 is configured to determine a data field of the CT frame, based on a Cylic Redundancy Check, CRC, field of the CT frame, to be either an error-free data field or an erroneous data field. According to the CAN standard, the CT frame includes the CRC field representing a checksum of the data field of the CT frame and preferably at least one other field of the CT frame. In an example, the CRC field represents a checksum of the whole CT frame. In an example, the control unit 112 may be configured to determine the checksum for an at least partially received CT frame. For example, if a data field of a CT frame has already been received by the CAN transceiver 100, in an example, the control unit 112 may be configured to determine the checksum based on the data field, and compare the determined checksum to the value represented by the CRC field of the CT frame. If the determined checksum is identical to the value represented by the CRC field, the data field of the received CT frame is error-free. However, if there is a difference between the determined checksum and the value represented by the CRC field, the data field of the received CT frame is erroneous. In an example, the control unit 112 is configured to perform the previously evaluation. Further, the control unit 112 is preferably configured to discard a received CT frame if the data field of the CT frame is in error. Otherwise, the CT frame may be retained.

By checking the value represented by the CRC field of a received CT frame against the actual checksum, an authorization check of the CT frame can be performed by the control unit 112. As a result, only positively authorized and thus error-free CT frames are further used, so that safety is improved with respect to the possible control of the control interface 110.

It should be noted, however, that a frame may have been sent by a malicious CAN node 128, where the CRC field of the frame represents a valid checksum of the data field of the frame. To prevent a frame sent by a malicious CAN node 180 from causing undesired control of the control interface 110, it has been found through investigation to be advantageous if further verification of the received frame is performed before actual active control of the control interface 110 can occur based on a data field of the frame.

A frame according to the CAN standard comprises a number of predetermined bits and fields. The corresponding bits and fields have already been explained before. A frame according to the CAN standard therefore includes an AD bit and an EOF field.

In an example, the control unit 112 is configured to detect the AD bit of a received CT frame and the EOF field of the received CT frame. Detection of the AD bit and bits of the EOF field may be performed by the control unit 112 even before the complete CT frame is received.

If a frame is sent by a malicious CAN node 128, and it is detected by another non-malicious CAN node 128 that the malicious CAN node 128 should not have sent the frame, the non-malicious CAN node 128 may send an error frame that overwrites the AD bit and/or at least one bit of the EOF field of the frame sent by the malicious CAN node 128 with dominant bits.

In an example, the control unit 112 of the CAN transceiver 100 is configured to detect whether at least one dominant bit is encompassed by the AD bit of the CT frame and the EOF field of the CT frame. In an example, when referring to the EOF field, this preferably means all bits of the EOF field except for the last bit of the EOF field. In another example, when referring to the EOF field, this preferably means the first two, first three or first four bits of the EOF field, but preferably not the remaining bits of the EOF. Thus, if the AD bit or a bit of the EOF field (preferably except for the last bit thereof, for instance in one of the first three bits of the EOF) of the CT frame is overwritten by a dominant bit of an error frame, the control unit 112 may detect the at least one dominant bit. Once a dominant AD bit or a dominant bit of the EOF field of the CT frame is detected, it can be concluded or suspected that the CT frame was sent by a malicious and/or illegally operating CAN node 128, such that the CT frame is unauthorized. This unauthorized CT frame should therefore not be allowed to be used to cause the control interface 110 to be controlled.

In an example, the control unit 112 of the CAN transceiver 100 is configured to determine the CT frame as an AT frame (authorized CT frame) only if neither the AD bit of the CT frame nor (preferably the first three bits of) the EOF field of the CT frame includes a dominant bit. Otherwise, the control unit 112 is configured to determine the CT frame to be a UT frame (unauthorized CT frame). The control unit 112 may be configured to discard the CT frame determined to be a UT frame. This may effectively prevent a CT frame sent by a malicious CAN node 128 from causing active control of the control interface 110 of the CAN transceiver 100. The security of the CAN transceiver 100, and potentially the security of a device coupled to the control interface 110, is thereby improved.

To the extent that the CAN transceiver 100 receives a frame from a non-malicious CAN node 128, the frame being potentially considered suitable for controlling the control interface 110 based on the associated identification information, it may subsequently be found upon checking of the frame's data field that the data field does not represent instructions for controlling the control interface 110, but may represent data alone that is not suitable for controlling the control interface 110.

It has been found to be advantageous if the control unit 112 of the CAN transceiver 100 is configured to check whether a data field of an AT frame represents control instructions for the control interface 110. As a result, the computing effort of control unit 112 for the respective check takes place only on the basis of a data field of an AT frame that has already been previously determined as an authorized frame. The effort required to check whether the data field of an AT frame actually represents control instructions can therefore be kept particularly low.

In an example, the control unit 112 is further configured to send or receive a control signal via the control interface 110 based on the data field of the AT frame if the data field of the AT frame represents control instructions. Otherwise, it is preferred that the control unit neither transmit a control signal nor receive a control signal via the control interface 110. By checking the data field of the AT frame, it can be ensured that the control interface 110 is only used in the case where the data field of the AT frame actually represents control instructions.

In an example, the control unit 112 is configured to reject the UT frame, i.e., the unauthorized CT frame, and/or prevent control of the control interface 110 based on the data field of the UT frame. Thus, the UT frame is effectively prevented from causing control of the control interface 110.

In an example, the control interface 110 may be configured to transmit an analog signal and/or to transmit a digital signal. In another example, the control interface 110 may be configured to receive an analog signal and/or to receive a digital signal. As previously explained, it is also possible that the control interface 110 may be configured to both receive signals and transmit signals.

Figure 2 schematically illustrates an embodiment of a CAN node 128 comprising a CAN transceiver 100 according to the present disclosure. The CAN node 128 further comprises a CAN controller 104. The CAN node 128 may therefore be configured as a CAN device. The RXD output interface 106 of the CAN transceiver 100 and the TXD input interface 102 of the CAN transceiver 100 are coupled to the CAN controller 104.

In an example, the RXD output interface 106 of the CAN transceiver 100 may be coupled to the CAN controller 100, in particular to an associated RXD input 144, via a signal connection 132. In another example, the TXD input interface 102 of the CAN transceiver 100 may be coupled to the CAN controller 100, in particular to an associated TXD output 146, via a further signal connection 130.

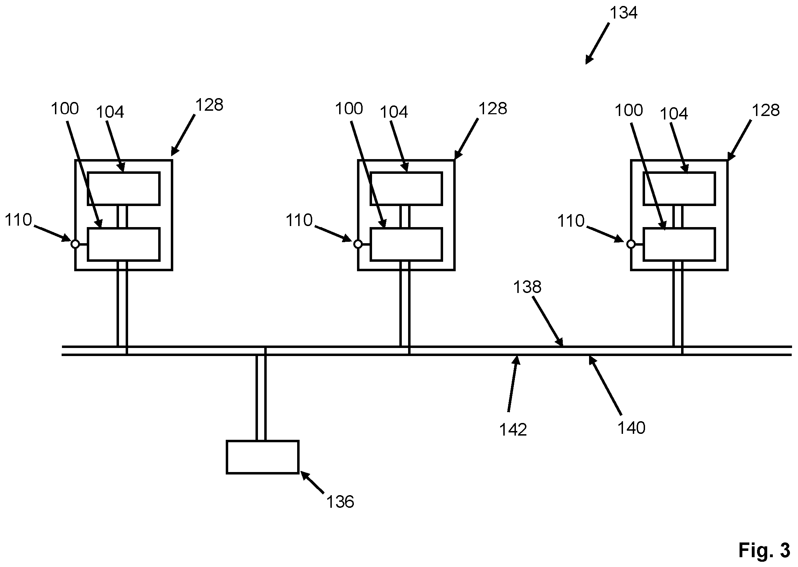

Figure 3 schematically illustrates one embodiment of a CAN system 134. The CAN system 134 includes a CAN bus 142, a plurality of CAN nodes 128, and a CAN module 136. Each CAN node 128, or at least one CAN node 128, may be formed according to the aforementioned embodiment of a CAN node 128. This at least one CAN node 128 comprises a CAN transceiver 100 according to the present disclosure, wherein the CAN transceiver 100 is coupled to the CAN bus 142 via the associated CAN BUS interface 108.

The CAN bus 142 may also be referred to and/or configured as a CAN BUS or a CAN network. The CAN bus 142 may have a plurality of sections, each comprising a two-wire line (including a first wire 138 and a second wire 140). The CAN bus 142 may further comprise a plurality of switching units / gateways. Said sections and optional switching units / gateways may form a network as the CAN bus 142 that extends between the plurality of CAN nodes 128 and the CAN module 136. The CAN bus 142 is configured to transmit a differential voltage signal. Thus, it is possible to transmit dominant bits and recessive bits according to the CAN standard by different voltage levels and by different, differential voltages, respectively, via the CAN bus 142.

The CAN module 136 may be configured as a monitoring module that sends an error frame if one of the CAN nodes 128 has been compromised to become a malicious CAN node 128 and sends an unauthorized frame over the CAN bus 142.

In an example, the CAN module 136 is configured to send an error message representing an error frame over the CAN bus 142 if a CAN node 128 of the CAN system 134 sends a CAN bus signal over the CAN bus 142 representing a frame with identification information that is not allowed to be used by the sending CAN node 128 for the frame. Preferably, the CAN module 136 is configured to send the error message during the transmission from the transmitting CAN node128 and/or before the transmission is completed. In an example, if the transmitting CAN node 128 is malicious and is using identification information that may only be used by another CAN node 128 to transmit a frame, the CAN module 136 may intervene and transmit the error frame (preferably during the transmission of the transmitting CAN node 128) such that each CAN node 128 comprising a CAN transceiver 100 having an associated control interface 110 in accordance with the present disclosure prevents the frame transmitted by the malicious CAN node 128 from causing the respective control interface 110 to be controlled by control instructions of the frame.

In an example, the CAN module 136 may be included by one of the CAN nodes 128.

Figure 4 schematically illustrates a flow chart for an embodiment of the method according to the present disclosure.

The method relates to a CAN transceiver 100 according to the present disclosure. The method comprises the steps a) to c): a) the control unit 112 detects a frame represented by a received CAN BUS signal as a relevant, CT, frame being relevant for controlling the control interface 110 based on a stored reference identification information; b) the control unit 112 classifies the CT frame as either an authorized, AT, frame or an unauthorized, UT, frame based on an acknowledge delimiter, AD, bit of the CT frame and based on an end of frame, EOF, field of the CT frame; and c) the control unit 112 controls the control interface based on a data field of the AT frame if the data field of the AT frame represents control instructions for controlling the control interface 110.

Although the described exemplary embodiments disclosed herein focus on devices, systems, and methods for using same, the present disclosure is not necessarily limited to the example embodiments illustrate herein.

The systems and methods described herein may at least partially be embodied by a computer program or a plurality of computer programs, which may exist in a variety of forms both active and inactive in a single computer system or across multiple computer systems. For example, they may exist as software program(s) comprised of program instructions in source code, object code, executable code or other formats for performing some of the steps. Any of the above may be embodied on a computer-readable medium, which may include storage devices and signals, in compressed or uncompressed form.

As used herein, the term "computer" refers to any electronic device comprising a processor, such as a general-purpose central processing unit (CPU), a specific-purpose processor or a microcontroller. A computer is capable of receiving data (an input), of performing a sequence of predetermined operations thereupon, and of producing thereby a result in the form of information or signals (an output). Depending on the context, the term "computer" will mean either a processor in particular or more generally a processor in association with an assemblage of interrelated elements contained within a single case or housing.

The term "control unit" refers to a data processing circuit that may be a microprocessor, a co-processor, a microcontroller, a microcomputer, a central processing unit, a field programmable gate array (FPGA), a programmable logic circuit, and/or any circuit that manipulates signals (analog or digital) based on operational instructions that are stored in a memory. The term "memory" refers to a storage circuit or multiple storage circuits such as read-only memory, random access memory, volatile memory, non-volatile memory, static memory, dynamic memory, Flash memory, cache memory, and/or any circuit that stores digital information.

As used herein, a "computer-readable medium" or "storage medium" may be any means that can contain, store, communicate, propagate, or transport a computer program for use by or in connection with the instruction execution system, apparatus, or device. The computer-readable medium may be, for example but not limited to, an electronic, magnetic, optical, electromagnetic, infrared, or semiconductor system, apparatus, device, or propagation medium. More specific examples (non-exhaustive list) of the computer-readable medium may include the following: an electrical connection having one or more wires, a portable computer diskette, a random-access memory (RAM), a read-only memory (ROM), an erasable programmable read-only memory (EPROM or Flash memory), an optical fiber, a portable compact disc read-only memory (CDROM), a digital versatile disc (DVD), a Blu-ray disc (BD), and a memory card.

## Claims

1. A Controller Area Network, CAN, transceiver (100) comprising:
A transmit data, TXD, input interface (102) for receiving a TXD input signal from a CAN controller (104),
a receive data, RXD, output interface (106) for transmitting an RXD output signal to the CAN controller,
a CAN BUS interface (108) for transmitting and receiving a CAN BUS signal,
a control interface (110) for transmitting and/or receiving control signals, and
a control unit (112),
wherein the control unit is configured to detect, based on a stored reference identification information, a frame represented by a received CAN BUS signal as a control, CT, frame being relevant and/or adapted for controlling the control interface,
wherein the control unit is configured to detect Acknowledge Delimiter, AD, bit of the CT frame and an End-Of-Frame, EOF, field of the CT frame, and determine whether at least one dominant bit is encompassed by the AD bit and the EOF field, either including the last bit of the EOF field or except for a last bit of the EOF field,
wherein the control unit is configured to classify the CT frame as either an authorized, AT, frame, only if the AD bit and the EOF field are not encompassing a dominant bit, or an unauthorized, UT, frame otherwise, and wherein the control unit is configured to control the control interface based on a data field of the AT frame if the data field of the AT frame represents control instructions for controlling the control interface.

2. The transceiver according to claim 1, wherein the control interface is designed as a general purpose input/output.

3. The transceiver according to any of the preceding claims, wherein the transceiver is configured to receive a feedback signal via the control interface resulting from a prior signal sent via the control interface, wherein the control unit is configured to detect either an error in the feedback signal or whether the feedback signal represents an error, and wherein the transceiver is configured to send, in case of an detected error, a CAN BUS signal via BUS interface indicating the detected error.

4. The transceiver according to any of the preceding claims, wherein the transceiver comprises a receiver (114), wherein an input of the receiver is coupled to the CAN BUS interface, and wherein the receiver is adapted to generate a digital RXD output signal based on the CAN BUS signal.

5. The transceiver according to the preceding claim, wherein an output of the receiver is directly coupled to the RXD output interface and directly coupled to the control unit.

6. The transceiver according to any of the preceding claims, wherein the transceiver comprises a transmitter (116) adapted to generate a CAN BUS signal based on the TXD input signal, wherein an input of the transmitter is coupled to the TXD input interface and an output of the transmitter is coupled to the CAN BUS interface.

7. The transceiver according to any of the preceding claims, wherein the control unit is configured to detect each frame in the RXD output signal.

8. The transceiver according to the preceding claim, wherein the control unit is configured to perform the following steps i) to iii) for each frame:
i) detect as identification information an identifier field of the frame and/or predefined bits of the frame,
ii) compare the detected identification information of the frame with the reference identification information, and
iii) determine the frame as a CT frame, if the detected identification information of the frame is identical to or corresponds to the reference identification information.

9. The transceiver according to the preceding claim, wherein the control unit is configured to discard a detected frame if the associated identification information is not identical to the reference identification information.

10. The transceiver according to any of the preceding claims, wherein the control unit is configured to determine the CT frame as either error-free or erroneous based on a Cyclic Redundancy Check, CRC, field of the CT frame, wherein the control unit is configured to discard the CT frame if the CT frame is erroneous.

11. The transceiver according to any of the preceding claims, wherein the control unit is configured to check whether a data field of the AT frame represents control instructions for the control interface, and wherein the control unit is configured to transmit or receive a control signal over the control interface based on the data field of the AT frame only if the data field of the AT frame represents control instructions.

12. The transceiver according to any of the preceding claims, wherein the control unit is configured to discard the UT frame and/or prevent control of the control interface based on a data field of the UT frame.

13. A CAN node (128), comprising: a CAN controller (104), and a transceiver (100) according to any of the preceding claims, the transceiver being coupled to the CAN controller via the TXD input interface (102) and via the RXD output interface (106).

14. A CAN system (134), comprising: a CAN BUS (142), and a plurality of CAN nodes (128), and a CAN module (136) coupled to the CAN BUS, wherein each CAN node being according to the preceding claim, wherein each CAN node being coupled to the CAN BUS via the associated transceiver, and wherein the CAN module is configured to send an error message representing an error frame via the CAN BUS if a CAN node sends a CAN BUS signal via the CAN BUS that represents a frame with an identification information not being permitted to be used by the sending CAN node for a frame.

15. A method for a Controller Area Network, CAN, transceiver (100) comprising a transmit data, TXD, input interface (102) for receiving a TXD input signal from a CAN controller (104), a receive data, RXD, output interface (106) for transmitting a RXD output signal to the CAN controller, a CAN BUS interface (108) for transmitting and receiving a CAN BUS signal, a control interface (110) for transmitting and/or receiving control signals, and a control unit (112), wherein the method comprises the steps of:
a) the control unit detects a frame represented by a received CAN BUS signal as a relevant control, CT, frame being relevant and/or adapted for controlling the control interface based on a stored reference identification information,
b) the control unit detects an Acknowledge Delimiter, AD, bit of the CT frame and an End-of-Frame, EOF, field of the CT frame, and determines whether at least one dominant bit is encompassed by the AD bit and the EOF field, either including the last bit of the EOF field or except for a last bit of the EOF field; and the control unit classifies the CT frame as either an authorized, AT, frame, only if the AD bit and the EOF field are not encompassing a dominant bit, or an unauthorized, UT, frame otherwise, and
c) the control unit controls the control interface based on a data field of the AT frame if the data field of the AT frame represents control instructions for controlling the control interface.

## Patentansprüche

1. Steuerbereichsnetz-Sendeempfänger, CAN-Sendeempfänger, (100), der Folgendes umfasst:
eine Sendedateneingabeschnittstelle, TXD-Eingabeschnittstelle, (102) zum Empfangen eines TXD-Eingangssignals von einer CAN-Steuereinheit (104),
eine Empfangsdatenausgabeschnittstelle, RXD-Ausgabeschnittstelle, (106) zum Senden eines RXD-Ausgangssignals an die CAN-Steuereinheit,
eine CAN-BUS-Schnittstelle (108) zum Senden und Empfangen eines CAN-BUS-Signals,
eine Steuerschnittstelle (110) zum Senden und/oder Empfangen von Steuersignalen und
eine Steuereinheit (112),
wobei die Steuereinheit konfiguriert ist, anhand von gespeicherten Referenzidentifizierungsinformationen einen Rahmen, der durch ein empfangenes CAN-BUS-Signal empfangen wird, als einen Steuerrahmen, CT-Rahmen, der zur Steuerung der Steuerschnittstelle relevant und/oder ausgelegt ist, zu detektieren,
wobei die Steuereinheit konfiguriert ist, ein Bestätigungsbegrenzer-Bit, AD-Bit, des CT-Rahmens und ein Rahmenendfeld, EOF-Feld, des CT-Rahmens zu detektieren und zu bestimmen, ob mindestens ein dominantes Bit von dem AD-Bit und dem EOF-Feld umgeben ist, entweder das letzte Bit des EOF-Feldes enthaltend oder ohne das letzte Bits de EOF-Feldes,
wobei die Steuereinheit konfiguriert ist, den CT-Rahmen entweder als einen autorisierten Rahmen, AT-Rahmen, nur dann, wenn das AD-Bit und das EOF-Feld kein dominantes Bit umgeben, oder anderenfalls einen nicht autorisierten Rahmen, UT-Rahmen, einzuordnen, und wobei die Steuereinheit konfiguriert ist, die Steuerschnittstelle anhand eines Datenfeldes des AT-Rahmens zu steuern, wenn das Datenfeld des AT-Rahmens Steueranweisungen zum Steuern der Steuerschnittstelle repräsentiert.

2. Sendeempfänger nach Anspruch 1, wobei die Steuerschnittstelle als eine Universal-Eingabe/Ausgabe gestaltet ist.

3. Sendeempfänger nach einem der vorhergehenden Ansprüche, wobei der Sendeempfänger konfiguriert ist, ein Rückkopplungssignal über die Steuerschnittstelle zu empfangen, das sich aus einem vorherigen Signal ergibt, das über die Steuerschnittstelle gesendet wird, wobei die Steuereinheit konfiguriert ist, entweder einen Fehler in dem Rückkopplungssignal zu detektieren oder zu detektieren, ob das Rückkopplungssignal einen Fehler repräsentiert, und wobei der Sendeempfänger konfiguriert ist, im Fall eines detektierten Fehlers ein CAN-BUS-Signal über eine BUS-Schnittstelle, das den detektierten Fehler angibt, zu senden.

4. Sendeempfänger nach einem der vorhergehenden Ansprüche, wobei der Sendeempfänger einen Empfänger (114) umfasst, wobei ein Eingang des Empfängers an die CAN-BUS-Schnittstelle gekoppelt ist und wobei der Empfänger ausgelegt ist, ein digitales RXD-Ausgangssignal anhand des CAN-BUS-Signals zu erzeugen.

5. Sendeempfänger nach dem vorhergehenden Anspruch, wobei eine Ausgabe des Empfängers unmittelbar an die RXD-Ausgabeschnittstelle gekoppelt ist und unmittelbar an die Steuereinheit gekoppelt ist.

6. Sendeempfänger nach einem der vorhergehenden Ansprüche, wobei der Sendeempfänger einen Sender (116) umfasst, der ausgelegt ist, ein CAN-BUS-Signal anhand des TXD-Eingangssignals zu erzeugen, wobei ein Eingang des Senders an die TXD-Eingabeschnittstelle gekoppelt ist und ein Ausgang des Senders an die CAN-BUS-Schnittstelle gekoppelt ist.

7. Sendeempfänger nach einem der vorhergehenden Ansprüche, wobei die Steuereinheit konfiguriert ist, jeden Rahmen in dem RXD-Ausgangssignal zu detektieren.

8. Sendeempfänger nach dem vorhergehenden Anspruch, wobei die Steuereinheit konfiguriert ist, die folgenden Schritte i) bis iii) für jeden Rahmen auszuführen:
i) Detektieren als Identifizierungsinformationen eines Kennungsfeldes des Rahmens und/oder vordefinierter Bits des Rahmens,
ii) Vergleichen der detektierten Identifizierungsinformationen des Rahmens mit den Referenzidentifizierungsinformationen und
iii) Bestimmen des Rahmens als einen CT-Rahmen, wenn die detektierten Identifizierungsinformationen des Rahmens mit den Referenzidentifizierungsinformationen identisch sind oder diesen entsprechen.

9. Sendeempfänger nach dem vorhergehenden Anspruch, wobei die Steuereinheit konfiguriert ist, einen detektierten Rahmen zu verwerfen, wenn die zugeordneten Identifizierungsinformationen nicht mit den Referenzidentifizierungsinformationen identisch sind.

10. Sendeempfänger nach einem der vorhergehenden Ansprüche, wobei die Steuereinheit konfiguriert ist, den CT-Rahmen entweder als fehlerfrei oder fehlerhaft anhand eines Feldes einer zyklischen Redundanzprüfung, CRC-Feld, des CT-Rahmens zu bestimmen, wobei die Steuereinheit konfiguriert ist, den CT-Rahmen zu verwerfen, wenn der CT-Rahmen fehlerhaft ist.

11. Sendeempfänger nach einem der vorhergehenden Ansprüche, wobei die Steuereinheit konfiguriert ist, zu überprüfen, ob ein Datenfeld des AT-Rahmens Steueranweisungen für die Steuerschnittstelle repräsentiert, und wobei die Steuereinheit konfiguriert ist, ein Steuersignal über die Steuerschnittstelle anhand des Datenfeldes des AT-Rahmens nur dann zu senden oder zu empfangen, wenn das Datenfeld des AT-Rahmens Steueranweisungen repräsentiert.

12. Sendeempfänger nach einem der vorhergehenden Ansprüche, wobei die Steuereinheit konfiguriert ist, den UT-Rahmen zu verwerfen und/oder eine Steuerung der Steuerschnittstelle anhand eines Datenfeldes des UT-Rahmens zu verhindern.

13. CAN-Knoten (128), der Folgendes umfasst: eine CAN-Steuereinheit (104) und einen Sendeempfänger (100) nach einem der vorhergehenden Ansprüche, wobei der Sendeempfänger an die CAN-Steuereinheit über die TXD-Eingangsschnittstelle (102) und über die RXD-Ausgabeschnittstelle (106) gekoppelt ist.

14. CAN-System (134), das Folgendes umfasst: einen CAN-BUS (142) und mehrere CAN-Knoten (128) und ein CAN-Modul (136), das an den CAN-BUS gekoppelt ist, wobei jeder CAN-Knoten nach dem vorhergehenden Anspruch ist, wobei jeder CAN-Knoten an den CAN-Bus über den zugeordneten Sendeempfänger gekoppelt ist und wobei das CAN-Modul konfiguriert ist, eine Fehlernachricht, die einen Fehlerrahmen repräsentiert, über den CAN-BUS zu senden, wenn ein CAN-Knoten ein CAN-BUS-Signal über den CAN-BUS sendet, der einen Rahmen mit Identifizierungsinformationen repräsentiert, für die es dem sendenden CAN-Knoten nicht erlaubt ist, sie für einen Rahmen zu verwenden.

15. Verfahren für einen Steuerbereichsnetz-Sendeempfänger, CAN-Sendeempfänger, (100), der eine Sendedateneingabeschnittstelle, TXD-Schnittstelle, (102) zum Empfangen eines TXD-Eingangssignals von einer CAN-Steuereinheit (104), eine Empfangsdatenausgabeschnittstelle, RXD-Ausgabeschnittstelle, (106) zum Senden eines RXD-Ausgangssignals an die CAN-Steuereinheit, eine CAN-BUS-Schnittstelle (108) zum Senden und Empfangen eines CAN-BUS-Signals, eine Steuerschnittstelle (110) zum Senden und/oder Empfangen von Steuersignalen und eine Steuereinheit (112) umfasst, wobei das Verfahren die folgenden Schritte umfasst:
a) die Steuereinheit detektiert einen Rahmen, der durch ein empfangenes CAN-BUS-Signal repräsentiert wird, als einen relevanten Steuerrahmen, CT-Rahmen, der zur Steuerung der Steuerschnittstelle relevant und/oder ausgelegt ist, anhand von gespeicherten Referenzidentifizierungsinformationen,
b) die Steuereinheit detektiert ein Bestätigungsbegrenzer-Bit, AD-Bit, des CT-Rahmens und ein Rahmenendfeld, EOF-Feld, des CT-Rahmens und bestimmt, ob mindestens ein dominantes Bit durch das AD-Bit und das EOF-Feld umgeben wird, entweder das letzte Bit des EOF-Feldes enthaltend oder außer dem letzten Bit des EOF-Feldes; und die Steuereinheit ordnet den CT-Rahmen entweder als einen autorisierten Rahmen, AT-Rahmen, nur dann, wenn das AD-Bit und das EOF-Feld nicht ein dominantes Bit umgeben, oder anderenfalls einen nicht autorisierten Rahmen, UT-Rahmen, ein und
c) die Steuereinheit steuert die Steuerschnittstelle anhand eines Datenfeldes des AT-Rahmens, wenn das Datenfeld des AT-Rahmens Steueranweisungen zum Steuern der Steuerschnittstelle repräsentiert.

## Revendications

1. Émetteur-récepteur (100) de réseau de zone de contrôleur, CAN, comprenant :
une interface d'entrée de données de transmission, TXD, (102) pour recevoir un signal d'entrée TXD d'un contrôleur CAN (104),
une interface de sortie de données de réception, RXD, (106) pour transmettre un signal de sortie RXD au contrôleur CAN,
une interface de bus CAN (108) pour la transmission et la réception d'un signal de bus CAN,
une interface de commande (110) pour transmettre et/ou recevoir des signaux de commande, et
une unité de commande (112),
où l'unité de commande est configurée pour détecter, sur la base d'informations d'identification de référence stockée, une trame représentée par un signal de bus CAN reçu en tant que trame de commande, CT, étant pertinente et/ou adaptée pour commander l'interface de commande,
où l'unité de commande est configurée pour détecter un bit de délimiteur d'accusé de réception, AD, de la trame CT et un champ de fin de trame, EOF, de la trame CT, et déterminer si au moins un bit dominant est compris dans le bit AD et le champ EOF, soit y compris le dernier bit du champ EOF, soit à l'exception du dernier bit du champ EOF,
où l'unité de commande est configurée pour classer la trame CT soit en tant que trame autorisée AT uniquement si le bit AD et le champ EOF ne comprennent pas de bit dominant, soit en tant que trame non autorisée UT dans le cas contraire, et où l'unité de commande est configurée pour commander l'interface de commande sur la base d'un champ de données de la trame AT si le champ de données de la trame AT représente des instructions de commande pour commander l'interface de commande.

2. Émetteur-récepteur selon la revendication 1, dans lequel l'interface de commande est conçue en tant qu'entrée/sortie à usage général.

3. Émetteur-récepteur selon l'une quelconque des revendications précédentes, dans lequel l'émetteur-récepteur est configuré pour recevoir un signal de rétroaction par l'intermédiaire de l'interface de commande résultant d'un signal antérieur envoyé par l'intermédiaire de l'interface de commande, où l'unité de commande est configurée pour détecter soit une erreur dans le signal de rétroaction, soit si le signal de rétroaction représente une erreur, et où l'émetteur-récepteur est configuré pour envoyer, en cas d'erreur détectée, un signal de bus CAN par l'intermédiaire d'une interface de bus indiquant l'erreur détectée.

4. Émetteur-récepteur selon l'une quelconque des revendications précédentes, dans lequel l'émetteur-récepteur comprend un récepteur (114), où une entrée du récepteur est couplée à l'interface de bus CAN, et où le récepteur est adapté pour générer un signal de sortie RXD numérique sur la base du signal de bus CAN.

5. Émetteur-récepteur selon la revendication précédente, dans lequel une sortie du récepteur est directement couplée à l'interface de sortie RXD et directement couplée à l'unité de commande.

6. Émetteur-récepteur selon l'une quelconque des revendications précédentes, dans lequel l'émetteur-récepteur comprend un émetteur (116) adapté pour générer un signal de bus CAN sur la base du signal d'entrée TXD, où une entrée de l'émetteur est couplée à l'interface d'entrée TXD et une sortie de l'émetteur est couplée à l'interface de bus CAN.

7. Émetteur-récepteur selon l'une quelconque des revendications précédentes, dans lequel l'unité de commande est configurée pour détecter chaque trame dans le signal de sortie RXD.

8. Émetteur-récepteur selon la revendication précédente, dans lequel l'unité de commande est configurée pour exécuter les étapes i) à iii) suivantes pour chaque trame :
i) détecter en tant qu'informations d'identification un champ d'identification de la trame et/ou des bits prédéfinis de la trame,
ii) comparer les informations d'identification détectées de la trame à des informations d'identification de référence, et
iii) déterminer la trame en tant que trame CT, si les informations d'identification détectées de la trame sont identiques ou correspondent aux informations d'identification de référence.

9. Émetteur-récepteur selon la revendication précédente, dans lequel l'unité de commande est configurée pour rejeter une trame détectée si les informations d'identification associées ne sont pas identiques aux informations d'identification de référence.

10. Émetteur-récepteur selon l'une quelconque des revendications précédentes, dans lequel l'unité de commande est configurée pour déterminer la trame CT comme étant soit exempte d'erreur, soit erronée sur la base d'un champ de contrôle de redondance cyclique, CRC, de la trame CT, où l'unité de commande est configurée pour rejeter la trame CT si la trame CT est erronée.

11. Émetteur-récepteur selon l'une quelconque des revendications précédentes, dans lequel l'unité de commande est configurée pour vérifier si un champ de données de la trame AT représente des instructions de commande pour l'interface de commande, et où l'unité de commande est configurée pour transmettre ou recevoir un signal de commande sur l'interface de commande sur la base du champ de données de la trame AT uniquement si le champ de données de la trame AT représente des instructions de commande.

12. Émetteur-récepteur selon l'une quelconque des revendications précédentes, dans lequel l'unité de commande est configurée pour rejeter la trame UT et/ou empêcher la commande de l'interface de commande sur la base d'un champ de données de la trame UT.

13. Nœud CAN (128) comprenant : un contrôleur CAN (104), et un émetteur-récepteur (100) selon l'une quelconque des revendications précédentes, l'émetteur-récepteur étant couplé au contrôleur CAN par l'intermédiaire de l'interface d'entrée TXD (102) et par l'intermédiaire de l'interface de sortie RXD (106).

14. Système CAN (134) comprenant : un bus CAN (142), et une pluralité de nœuds CAN (128), et un module CAN (136) couplé au bus CAN, où chaque nœud CAN est conforme à la revendication précédente, où chaque nœud CAN est couplé au bus CAN par l'intermédiaire de l'émetteur-récepteur associé, et où le module CAN est configuré pour envoyer un message d'erreur représentant une trame d'erreur par l'intermédiaire du bus CAN si un nœud CAN envoie un signal de bus CAN par l'intermédiaire du bus CAN qui représente une trame avec des informations d'identification dont l'utilisation n'est pas autorisée par le nœud CAN émetteur pour une trame.

15. Procédé pour un émetteur-récepteur CAN (100) comprenant une interface d'entrée de données d'émission (102) pour recevoir un signal d'entrée TXD d'un contrôleur CAN (104), une interface de sortie RXD de données de réception (106) pour transmettre un signal de sortie RXD au contrôleur CAN, une interface de bus CAN (108) pour transmettre et recevoir un signal de bus CAN, une interface de commande (110) pour transmettre et/ou recevoir des signaux de commande, et une unité de commande (112), où le procédé comprend les étapes suivantes :
a) l'unité de commande détecte une trame représentée par un signal de bus CAN reçu en tant que trame de commande pertinente, CT, étant pertinente et/ou adaptée pour commander l'interface de commande sur la base d'informations d'identification de référence stockées,
b) l'unité de commande détecte un bit de délimiteur d'accusé de réception, AD, de la trame CT et un champ de fin de trame, EOF, de la trame CT, et détermine si au moins un bit dominant est compris dans le bit AD et le champ EOF, soit y compris le dernier bit du champ EOF, soit à l'exception du dernier bit du champ EOF ; et l'unité de commande classe la trame CT soit en tant que trame AT autorisée, uniquement si le bit AD et le champ EOF ne comprennent pas de bit dominant, soit en tant que trame UT non autorisée dans le cas contraire, et
c) l'unité de commande commande l'interface de commande sur la base d'un champ de données de la trame AT si le champ de données de la trame AT représente des instructions de commande pour commander l'interface de commande.
